# EUROPEAN PATENT APPLICATION

(11) **EP 3 778 180 A1**
(43) Date of publication of application: **17.02.2021**
(21) Application number: 19778187.5
(22) Date of filing: 27.03.2019
(51) Int. Cl.: B29C 45/18, B29C 45/62, B29C 70/16, C08J 5/04

(54) **PRODUCTION METHOD FOR INJECTION MOLDED BODY COMPRISING DENSELY FILLED FIBER-REINFORCED RESIN COMPOSITION**

(30) Priority: 28.03.2018 JP 2018061987
(71) Applicant: Mitsui Chemicals, Inc., Minato-ku Tokyo 105-7122 (JP)
(72) Inventor: IWATA, Toshio, Chiba 299-0108 (JP); TORIGOE, Tsubasa, Chiba 299-0108 (JP); FUJITA, Daisuke, Chiba 299-0265 (JP)
(74) Representative: Hoffmann Eitle
(86) International application number: PCT/JP2019/013082
(87) International publication number: WO 2019/189300

(57) **Abstract**

[Object]

A method is provided which produces an injection molded article that includes a fiber-reinforced resin composition and attains a high fiber content and superior mechanical characteristics, in particular, impact resistance.

[Solution]

The method for producing an injection molded article including a highly-filled fiber-reinforced resin composition includes a step of charging a first resin feedstock including a thermoplastic polymer (A) into an injection molding machine through a first inlet port; a step of charging a second resin feedstock into the injection molding machine through a second inlet port disposed downstream of the first inlet port, the second resin feedstock including a masterbatch that includes long fibers (D) impregnated with a resin mixture including a thermoplastic polymer (B) and an acid-modified polyolefin (C); a step of melt-kneading the first resin feedstock and the second resin feedstock together in the injection molding machine to give a fiber-reinforced resin composition melt; and a step of injection molding the fiber-reinforced resin composition melt in a mold, the first resin feedstock being charged intermittently or continuously from the start to the end of the charging of the second resin feedstock.

## Description

### TECHNICAL FIELD

The present invention relates to a method for producing injection molded articles from a fiber-reinforced resin composition.

### BACKGROUND ART

Injection molded articles which are made from fiber-reinforced resin compositions including fibers such as glass fibers or carbon fibers and thermoplastic polymers have excellent mechanical characteristics and are therefore used in various applications such as, for example, automobile parts and aircraft parts. To obtain injection molded articles with enhanced mechanical characteristics such as strength, it is generally considered effective to increase the content of fibers in the resin composition, and to increase the length of fibers contained in the resin composition. If, however, the fiber content in the resin composition is too high, the dispersibility of the fibers in the resin composition is lowered to cause deteriorations in mechanical characteristics in some cases. If the resin composition contains too much fibers, the melt of the resin composition shows poor fluidity and an increased viscosity, and these and other factors may adversely affect the results of injection molding. If, on the other hand, the fiber content is too low, the addition of fibers may not produce sufficient effects in the improvement of mechanical characteristics.

For these and other reasons, numerous studies have been made to improve fiber-reinforced resin compositions. For example, fiber-reinforced resin compositions have been developed which attain excellent characteristics such as strength without using much carbon fibers (for example, Patent Literature 1).

Meanwhile, fiber-reinforced resin pellets are the usual feedstocks in injection molding processes. However, properties of molded articles that are obtained are less excellent than expected due to the breakage of fibers in the molding machine. A known approach to controlling the breakage of fibers is to feed fibers as such not in the form of fiber-reinforced resin pellets but in the form of continuous fibers or chopped fibers to the injection molding machine at a location downstream of the resin feedstock inlet port, for example, at a vent port (for example, Patent Literatures 2 to 4).

### CITATION LIST

### PATENT LITERATURE

Patent Literature 1: WO 2016/076411
Patent Literature 2: JP-A-H03-76614
Patent Literature 3: JP-A-2014-166712
Patent Literature 4: WO 2014/155409

### SUMMARY OF INVENTION

### TECHNICAL PROBLEM

Unfortunately, it is often difficult to produce injection molded articles from conventional fiber-reinforced resin compositions with enhancements in mechanical characteristics such as mechanical strength while maintaining a good appearance of the injection molded articles.

The present inventors first developed a "method (L) for producing injection molded articles from a fiber-reinforced resin composition including a step (I) in which a first resin feedstock including at least one thermoplastic polymer (A) selected from polyolefins (A1) and polyamides (A2) is charged into an injection molding machine through a first inlet port, a step (II) in which a second resin feedstock is charged into the injection molding machine through a second inlet port disposed downstream of the first inlet port wherein the second resin feedstock includes a masterbatch that includes long fibers (D) impregnated with a resin mixture including at least one thermoplastic polymer (B) selected from polyolefins (B1) and polyamides (B2), and an acid-modified polyolefin (C), a step (III) in which the first resin feedstock and the second resin feedstock are melt kneaded in the injection molding machine to give a fiber-reinforced resin composition melt, and a step (IV) in which the fiber-reinforced resin composition melt is injection molded in a mold". This method can mold the fiber-reinforced resin composition into injection molded articles which have enhanced mechanical characteristics such as mechanical strength while maintaining a good appearance.

However, this method (L) still has room for improvements in facilitating an increase in the content of the long fibers (D) in the fiber-reinforced resin composition, and in ameliorating the impact resistance of the fiber-reinforced resin composition.

It is therefore an object of the present invention to provide a method for producing injection molded articles that comprise a fiber-reinforced resin composition and attain a high fiber content and superior mechanical characteristics, in particular, impact resistance, or preferably a method for producing injection molded articles that comprise a fiber-reinforced resin composition and attain a high fiber content, superior mechanical characteristics, in particular, impact resistance, and further an excellent appearance.

### SOLUTION TO PROBLEM

After extensive studies, the present inventors have found that, in the method (L), increasing the content of the fibers in the fiber-reinforced resin composition results in a relative decrease in the amount of the first resin feedstock that is required compared to the second resin feedstock, and thus the whole of the first resin feedstock tends to be charged more quickly than the second resin feedstock; and the content of the long fibers (D) in the fiber-reinforced resin composition can be increased and the impact resistance of the fiber-reinforced resin composition can be ameliorated by charging the first resin feedstock not at once but intermittently or continuously from the start to the end of the charging of the second resin feedstock. The present inventors have completed this invention based on these findings.

A summary of the present invention is as follows.
[1] A method for producing an injection molded article comprising a highly-filled fiber-reinforced resin composition, the method comprising:
   a step (I) of charging a first resin feedstock into an injection molding machine through a first inlet port, the first resin feedstock comprising at least one thermoplastic polymer (A) selected from polyolefins (A1) and polyamides (A2),
   a step (II) of charging a second resin feedstock into the injection molding machine through a second inlet port disposed downstream of the first inlet port, the second resin feedstock comprising a masterbatch that includes long fibers (D) impregnated with a resin mixture including at least one thermoplastic polymer (B) selected from polyolefins (B1) and polyamides (B2), and an acid-modified polyolefin (C),
   a step (III) of melt-kneading the first resin feedstock and the second resin feedstock together in the injection molding machine to give a fiber-reinforced resin composition melt, and
   a step (IV) of injection molding the fiber-reinforced resin composition melt in a mold,
   the first resin feedstock being charged intermittently or continuously from the start to the end of the charging of the second resin feedstock.
[2] The production method described in [1], wherein the long fibers (D) comprise at least one selected from glass fibers (D'1) and carbon fibers (D'2).
[3] The method described in [1] or [2] for producing an injection molded article, wherein the content of the long fibers (D) in the highly-filled fiber-reinforced resin composition is not less than 30% by weight.
[4] The method described in any one of [1] to [3] for producing an injection molded article, wherein the masterbatch included in the second resin feedstock is one prepared through steps comprising:
   a step of impregnating a fiber (D') with a resin mixture including at least one thermoplastic polymer (B) selected from polyolefins (B1) and polyamides (B2), and an acid-modified polyolefin (C) to give a resin-impregnated fiber, and
   a step of cutting the resin-impregnated fiber.
[5] The method described in any one of [1] to [4] for producing an injection molded article, wherein the injection molding machine comprises a system which controls charging in such a manner that the first resin feedstock is charged intermittently or continuously from the start to the end of the charging of the second resin feedstock.
[6] The method described in [5] for producing an injection molded article, wherein the system is a unit comprising:
   a material charging hopper disposed above the first inlet port,
   a device that monitors the rate of charging of the first resin feedstock at the first inlet port,
   a device that monitors the rate of charging of the second resin feedstock at the second inlet port, and
   a device (1) and/or a device (2),
   wherein the device (1) is a device that, based on the rates of charging, opens or closes a feedstock shutter disposed at a lower portion of the material charging hopper, or controls the degree of openness of the feedstock shutter, and
   the device (2) is a mass-metering feedstock supply device disposed between the first inlet port and the material charging hopper.

### ADVANTAGEOUS EFFECTS OF INVENTION

According to the present invention, injection molded articles can be produced that include a fiber-reinforced resin composition and attain a high fiber content and superior mechanical characteristics, in particular, impact resistance, or injection molded articles can be preferably produced that include a fiber-reinforced resin composition and attain a high fiber content, superior mechanical characteristics, in particular, impact resistance, and further an excellent appearance.

### BRIEF DESCRIPTION OF DRAWINGS

[Fig. 1] Fig. 1 is a photograph of the surface of an injection molded article produced in Example 1.
[Fig. 2] Fig. 2 is a photograph of the surface of an injection molded article produced in Comparative Example 1.
[Fig. 3] Fig. 3 is a photograph of the surface of an injection molded article produced in Comparative Example 3.

### DESCRIPTION OF EMBODIMENTS

A first resin feedstock used in a method of the invention for producing an injection molded article includes at least one thermoplastic polymer (A) selected from polyolefins (A1) and polyamides (A2).

Examples of the polyolefins (A1) include propylene polymers such as propylene homopolymers, propylene/ethylene block copolymers, propylene/ethylene random copolymers, and propylene/α-olefin (α-olefin having 4 or more carbon atoms) copolymers; and
4-methyl-1-pentene polymers such as 4-methyl-1-pentene homopolymers, 4-methyl-1-pentene/ethylene copolymers, and 4-methyl-1-pentene/a-olefin (except 4-methyl-1-pentene) copolymers. Of these polyolefins (A1), propylene polymers are preferable.

The polyolefins (A1) may be used singly, or two or more may be used as a mixture.

The MFR of the polyolefins (A1) measured at 230°C under 2.16 kg load in accordance with ASTM D1238 is not particularly limited as long as the fabrication of injection molded articles is possible. When, for example, the polyolefin (A1) is a propylene polymer, the MFR is preferably 1 to 500 g/10 min, more preferably 5 to 400 g/10 min, and still more preferably 10 to 300 g/10 min.

The polyamide (A2) may be, for example, a polymer of an amino acid lactam, or a melt-moldable polymer obtained by the melt polycondensation reaction of a diamine and a dicarboxylic acid. Specific examples include the following polyamides.
(1) Polycondensates of a C4-C12 organic dicarboxylic acid and a C2-C13 organic diamine. Examples thereof include polyhexamethylene adipamide [6,6 nylon] that is a polycondensate of hexamethylenediamine with adipic acid, polyhexamethylene azelamide [6,9 nylon] that is a polycondensate of hexamethylenediamine with azelaic acid, polyhexamethylene sebacamide [6,10 nylon] that is a polycondensate of hexamethylenediamine with sebacic acid, polyhexamethylene dodecanoamide [6,12 nylon] that is a polycondensate of hexamethylenediamine with dodecanedioic acid, semi-aromatic polyamides (PA6T, PA9T, PA10T, PA11T) that are polycondensates of aromatic dicarboxylic acids with aliphatic diamines, and polybis(4-aminocyclohexyl)methanedodecane that is a polycondensate of bis-p-aminocyclohexylmethane with dodecanedioic acid. Specific examples of the organic dicarboxylic acids include adipic acid, pimelic acid, suberic acid, phthalic acid, terephthalic acid, isophthalic acid, naphthalenedicarboxylic acid, phenylenedioxydiacetic acid, oxydibenzoic acid, diphenylmethanedicarboxylic acid, diphenylsulfonedicarboxylic acid, biphenyldicarboxylic acid, sebacic acid and dodecanedioic acid. Specific examples of the organic diamines include hexamethylenediamine, octamethylenediamine, nonanediamine, octanediamine, decanediamine, undecadiamine, undecanediamine and dodecanediamine.
(2) Polycondensates of ω-amino acids. Examples thereof include polyundecaneamide [11 nylon] that is a polycondensate of ω-aminoundecanoic acid.
(3) Ring-opening polymers of lactams. Examples thereof include polycaproamide [6 nylon] that is a ring-opening polymer of ε-aminocaprolactam, and polylauric lactam [12 nylon] that is a ring-opening polymer of ε-aminolaurolactam.
(4) Polyamides produced from adipic acid, isophthalic acid and hexamethylenediamine.

The polyamides (A2) may be used singly, or two or more may be used as a mixture.

The melt flow rate (MFR) of the polyamides (A2) measured at the melting point of the polyamide (A2) plus 10°C under 1 kg load in accordance with ASTM D1238 is not particularly limited as long as the fabrication of injection molded articles is possible, and is preferably not less than 5 g/10 min, more preferably not less than 10 g/10 min, and particularly preferably not less than 12 g/10 min.

The thermoplastic polymer (A) included in the first resin feedstock may be a mixture of a polyolefin (A1) and a polyamide (A2). The first resin feedstock may further contain an additive. Examples of the additives that may be contained in the first resin feedstock include modifying additives such as dispersants, lubricants, plasticizers, flame-retardants, antioxidants (phenolic antioxidants, phosphorus antioxidants, sulfur antioxidants, etc.), antistatic agents, light stabilizers, UV absorbers, crystallization accelerators (nucleating agents, etc.), foaming agents, crosslinking agents and antibacterial agents; coloring agents such as pigments and dyes; carbon blacks, titanium oxides, red iron oxide, azo pigments, anthraquinone pigments, phthalocyanine and particulate fillers (talc, calcium carbonate, mica, clay, etc.); other short fiber fillers such as wollastonite; and whiskers such as potassium titanate.

A second resin feedstock used in the method of the invention for producing an injection molded article includes a masterbatch. This masterbatch includes long fibers (D) that are impregnated with a resin mixture including at least one thermoplastic polymer (B) selected from polyolefins (B1) and polyamides (B2), and an acid-modified polyolefin (C).

The long fibers (D) are fibers with a long average fiber length which are obtained by cutting a fiber (D'), and the average fiber length thereof is usually 1 to 20 mm, and the average fiber diameter is usually 3 to 30 µm.

Examples of the fibers (D') that give the long fibers (D) include glass fibers (D'1), carbon fibers (D'2) and cellulose fibers (D'3).

The glass fibers (D'1) are, for example, filament fibers produced by the melt spinning of glass. Examples of the glasses include E glass (electrical glass), C glass (chemical glass), A glass (alkali glass), S glass (high strength glass), and alkali resistant glass. The average fiber diameter of the glass fibers (D'1) is preferably 3 to 30 µm, more preferably 12 to 20 µm, and still more preferably 13 to 18 µm.

The glass fibers (D'1) may be continuous glass fiber bundles. The continuous glass fiber bundles may be commercially available glass rovings. The filament count per bundle of the continuous glass fiber bundles (the glass rovings) is preferably 400 to 10,000, more preferably 1,000 to 6,000, and still more preferably 2,000 to 5,000.

The carbon fibers (D'2) are fibers obtained by forming filaments from a raw material such as polyacrylonitrile, rayon, pitch, polyvinyl alcohol, regenerated cellulose or mesophase pitch, and calcining (carbonizing) the filaments. The average fiber diameter thereof is preferably 3 to 30 µm, and more preferably 4 to 10 µm.

The carbon fibers (D'2) may be continuous carbon fiber bundles. The continuous carbon fiber bundles may be commercially available tows. The filament count per bundle of the continuous carbon fiber bundles (the tows) is preferably 500 to 80,000, and more preferably 10,000 to 60,000. Such bundles are usually collections of carbon fibers bundled with a bundling agent (a sizing agent) such as an epoxy emulsion.

The surface of the carbon fibers (D'2) may be surface-treated by a process such as oxidative etching or coating. Examples of the oxidative etching treatments include air oxidation treatment, oxygen treatment, oxidizing gas treatment, ozone treatment, corona treatment, flame treatment, (atmospheric pressure) plasma treatment, and treatment with oxidizing liquids (nitric acid, aqueous solutions of alkali metal hypochlorites, potassium dichromate-sulfuric acid, potassium permanganate-sulfuric acid). Examples of the substances for coating the carbon fibers include carbon, silicon carbide, silicon dioxide, silicon, plasma monomers, ferrocene and iron trichloride.

The cellulose fibers (D'3) are preferably fibers of high purity. For example, cellulose fibers having an α-cellulose content of not less than 80% by weight are preferable. The average fiber diameter of the cellulose fibers is preferably 0.1 to 1000 µm.

Of the fibers (D'), at least one selected from glass fibers (D'1) and carbon fibers (D'2) is preferable. That is, the long fibers (D) preferably include at least one selected from glass fibers (D'1) and carbon fibers (D'2).

In the masterbatch, the long fibers (D) are impregnated with a resin mixture including at least one thermoplastic polymer (B) selected from polyolefins (B1) and polyamides (B2), and an acid-modified polyolefin (C).

Specific examples and preferred embodiments of the polyolefins (B1) that may be used as the thermoplastic polymers (B) are the same as those of the polyolefins (A1) that may be contained in the first resin feedstock. Further, specific examples and preferred embodiments of the polyamides (B2) that may be used as the thermoplastic polymers (B) are the same as those of the polyamides (A2) that may be contained in the first resin feedstock.

The acid-modified polyolefin (C) is a polyolefin modified with an acid such as an unsaturated carboxylic acid or a derivative thereof.

Examples of the acids used for the modification include unsaturated carboxylic acids such as acrylic acid, methacrylic acid, maleic acid, fumaric acid, itaconic acid, crotonic acid, citraconic acid, sorbic acid, mesaconic acid and angelic acid. Further, derivatives of these unsaturated carboxylic acids may also be used. Examples of such derivatives include acid anhydrides, esters, amides, imides and metal salts, with specific examples including maleic anhydride, itaconic anhydride, methyl acrylate, methyl methacrylate, ethyl acrylate, propyl acrylate, butyl acrylate, ethyl maleate, acrylamide, maleic acid amide, sodium acrylate and sodium methacrylate.

In particular, unsaturated dicarboxylic acids or derivatives thereof are preferable, and maleic acid and maleic anhydride are more preferable. The unsaturated carboxylic acids or derivatives thereof may be used singly, or two or more may be used in combination. The modification may be performed by any known method without limitation. For example, a method may be adopted in which a polyolefin is dissolved into a solvent, and an unsaturated carboxylic acid or a derivative thereof, and a radical generator are added to the solution, the mixture being then heated and stirred. Alternatively, the components may be supplied to an extruder and graft-copolymerized.

The acid content in the acid-modified polyolefin (C) is preferably 0.1 to 10% by mass, and more preferably 0.8 to 8% by mass. The acid content is determined by measuring an IR spectrum of the resin and comparing the area of a peak at 1670 cm⁻¹ to 1810 cm⁻¹ to a calibration curve prepared separately.

In particular, the acid-modified polyolefin (C) that is used is preferably one or more resins selected from acid-modified propylene polymers and acid-modified ethylene polymers, more preferably one or more polymers selected from maleic anhydride-modified propylene polymers (C1) and maleic anhydride-modified ethylene polymers (C2), and still more preferably a maleic anhydride-modified propylene polymer (C1).

The MFR of the acid-modified polyolefin (C) measured at 230°C under 2.16 kg load in accordance with ASTM D1238 is not particularly limited as long as the fabrication of injection molded articles is possible. When the acid-modified polyolefin (C) is a maleic anhydride-modified propylene polymer (C1), the MFR is preferably more than 150 g/10 min, more preferably not less than 200 g/10 min, still more preferably not less than 300 g/10 min, particularly preferably not less than 500 g/10 min, and most preferably not less than 600 g/10 min. The upper limit thereof may be, for example, 20,000 g/10 min.

The content of the long fibers (D) in the masterbatch is preferably 30 to 80% by weight, more preferably 40 to 75% by weight, still more preferably 45 to 70% by weight, and particularly preferably 50 to 65% by weight of the total of the thermoplastic polymer (B), the acid-modified polyolefin (C) and the long fibers (D) taken as 100% by weight. If the content of the long fibers (D) is below the lower limit, the productivity may be lowered. If the content of the long fibers (D) exceeds the upper limit, the fibers are too much and are not sufficiently impregnated with the resin, and the advantageous effects of the present invention may be impaired.

The masterbatch or the second resin feedstock may further contain an additive. Specific examples of such additives are the same as the additives that may be contained in the first resin feedstock.

The masterbatch is preferably one prepared through steps including a step of impregnating a fiber (D') with a resin mixture including at least one thermoplastic polymer (B) selected from polyolefins (B1) and polyamides (B2), and an acid-modified polyolefin (C) to give a resin-impregnated fiber, and a step of cutting the resin-impregnated fiber.

For example, a masterbatch which includes long fibers (D) impregnated with a resin mixture including a thermoplastic polymer (B) and an acid-modified polyolefin (C) is prepared through steps including a step (I') of preparing a resin mixture including at least one thermoplastic polymer (B) selected from polyolefins (B1) and polyamides (B2), and an acid-modified polyolefin (C) in an extruder, a step (II') of feeding the resin mixture to another extruder to prepare a melt of the resin mixture, and impregnating a fiber (D'), which is inserted into an impregnation die, with the melt to prepare a resin-impregnated fiber, and a step (III') of cutting the resin-impregnated fiber into a desired size with a pelletizer or the like.

In the present invention, the first resin feedstock and the second resin feedstock are injection molded using an injection molding machine to form an injection molded article made of a highly-filled fiber-reinforced resin composition.

In the production method of the present invention, first, the first resin feedstock including a thermoplastic polymer (A) is charged into an injection molding machine through an upstream first inlet port (step (I)). The feedstock may be charged in any manner without limitation. For example, the first resin feedstock may be charged from a hopper disposed in the injection molding machine.

Subsequently, the second resin feedstock which includes a masterbatch that includes long fibers (D) impregnated with a resin mixture including a thermoplastic polymer (B) and an acid-modified polyolefin (C) is charged through a second inlet port disposed downstream of the first inlet port (step (II)). That is, the resin feedstocks are charged in the separate first and second steps, and the masterbatch that includes long fibers (D) impregnated with a thermoplastic polymer (B) is charged through the second inlet port located downstream of the first inlet port. In this manner, it is possible to produce an injection molded article from a fiber-reinforced resin composition with enhanced mechanical characteristics such as mechanical strength while maintaining a good appearance. The manner of charging is not particularly limited as long as the long fibers (D) contained in the masterbatch are not adversely affected. For example, the second resin feedstock may be charged through a hopper. Alternatively, a vent port which is usually present downstream of the first inlet port may be used as the second inlet port, a feed device may be provided at this vent port, and the second resin feedstock may be charged through this feed device.

The diameter (hereinafter, also written as "D") of the screw in the cylinder of the injection molding machine is preferably 70 to 150 mm, more preferably 90 to 135 mm, and still more preferably 100 to 110 mm. The ratio (L/D) of the screw length (hereinafter, also written as "L") to the screw diameter (D) is preferably 10 to 40, and more preferably 20 to 35.

To ensure that the fiber-reinforced resin composition will give an injection molded article with enhanced mechanical characteristics such as mechanical strength while maintaining a good appearance, the distance between the first inlet port and the second inlet port in the injection molding machine is preferably 5D to 25D, and more preferably 10D to 20D.

To ensure that the components will be melt-kneaded sufficiently, the distance from the second inlet port to the nozzle which injects the fiber-reinforced resin composition is preferably not less than 5D, and more preferably not less than 10D.

In the production method of the present invention, the charging is controlled so that the first resin feedstock is charged intermittently or continuously from the start to the end of the charging of the second resin feedstock.

Increasing the content of the fibers in the fiber-reinforced resin composition results in a relative decrease in the amount of the first resin feedstock that is required compared to the second resin feedstock. Thus, without the above control, the whole of the first resin feedstock is charged more quickly before the completion of the charging of the second resin feedstock.

In contrast, in the present invention, the charging is controlled as described above without changing the total amount of the first resin feedstock that is added, and thus the fiber-reinforced resin composition can attain a high fiber content and enhanced uniformity. Consequently, the mechanical characteristics, in particular, the impact resistance, of the fiber-reinforced resin composition may be enhanced.

When the first resin feedstock is charged intermittently, the charging of the first resin feedstock and the interruption of the charging are repeated. The larger the number of repetitions, the more uniform the fiber-reinforced resin composition that is obtained.

Even when the charging of the first resin feedstock is discontinued immediately before the end of the charging of the second resin feedstock, any first resin feedstock may remain between the first inlet port and the second inlet port in the injection molding machine. In such cases, the remaining first resin feedstock may be melt-kneaded with the second resin feedstock. Thus, in the present invention, the phrase "to the end of the charging of the second resin feedstock" means not only "to the point where the charging of the second resin feedstock is ended", but also "to the point immediately before the end of the charging of the second resin feedstock" as long as the second resin feedstock can be melt-kneaded with the remaining first resin feedstock.

In the production method of the present invention, the second resin feedstock is supplied continuously or intermittently, and is usually supplied continuously.

The injection molding machine used in the production method of the present invention is preferably provided with a system which controls the charging in such a manner that the first resin feedstock is charged intermittently or continuously from the start to the end of the charging of the second resin feedstock.

For example, this system may be a unit including:
a material charging hopper disposed above the first inlet port,
a device that monitors the rate of charging of the first resin feedstock at the first inlet port,
a device that monitors the rate of charging of the second resin feedstock at the second inlet port, and
a device (1) and/or a device (2) (preferably a device (1) and a device (2)) described below.

The device (1) is a device (1) that, based on the rates of charging, opens or closes a feedstock shutter disposed at a lower portion of the material charging hopper, or controls the degree of openness of the feedstock shutter.

The device (2) is a mass-metering feedstock supply device disposed between the first inlet port and the material charging hopper.

With the use of this unit, the rate of charging of the first resin feedstock at the first inlet port, and the rate of charging of the second resin feedstock at the second inlet port are monitored. At the same time, based on the rates of charging, (1) the feedstock shutter disposed at a lower portion of the material charging hopper is opened and closed repeatedly, or the degree of openness of the feedstock shutter is controlled, or (2) the first resin feedstock is supplied in a metered amount that is required, so that the charging of the first resin feedstock will last to the end of the charging of the second resin feedstock. Preferably, both (1) and (2) are performed. In this manner, the first resin feedstock may be charged intermittently or continuously from the start to the end of the charging of the second resin feedstock.

The first resin feedstock and the second resin feedstock that are charged are melt-kneaded together in the injection molding machine to give a fiber-reinforced resin composition melt (step (III)). The melt-kneading conditions such as the preset temperature in the injection molding machine may be selected appropriately in accordance with factors such as the types of the first resin feedstock and the second resin feedstock that are used.

The fiber-reinforced resin composition melt prepared in the step (III) is injected into a mold to form an injection molded article including the highly-filled fiber-reinforced resin composition (step (IV)). The injection conditions may be selected appropriately in accordance with factors such as the shape of the mold and the injection molded article.

The content of the long fibers (D) in the fiber-reinforced resin composition is, for example, not less than 20% by weight of the total of the first resin feedstock and the second resin feedstock taken as 100% by weight. When the content of the long fibers (D) is in this range, the molded articles attain excellent impact resistance. Further, the content of the long fibers (D) in the fiber-reinforced resin composition is preferably not less than 30% by weight, and more preferably not less than 40% by weight of the total of the first resin feedstock and the second resin feedstock taken as 100% by weight. This lower limit of the content of the long fibers (D) ensures that the molded articles will be more excellent in impact resistance. Further, according to the present invention, a fiber-reinforced resin composition having such a high content of the long fibers (D) may be produced easily. On the other hand, the upper limit of the content of the long fibers (D) is preferably 60% by weight for a reason that the molded articles have an excellent appearance.

The content of the acid-modified polyolefin (C) is preferably 0.5 to 10% by weight, and more preferably 1 to 7% by weight of the total of the first resin feedstock and the second resin feedstock taken as 100% by weight. If the content of the acid-modified polyolefin (C) is below the lower limit, the interfacial adhesion between the fibers and the resins may be lowered to cause a decrease in strength. If, on the other hand, the content of the acid-modified polyolefin (C) exceeds the upper limit, mechanical characteristics such as strength may be decreased.

The molded articles obtained by the production method of the present invention are lightweight and have excellent surface appearance and mechanical strength, and thus may be suitably used as parts or members for various products such as automobiles, motorcycles, bicycles, strollers, wheelchairs, aircrafts and sports equipment. In particular, the molded articles may be suitably used as automobile parts or members.

Such automobile parts or members are of wide variety. Examples of such parts or members include interior parts or members such as door trims, door modules, instrument panels, center panels, roof panels, backdoor panels, and accelerator or brake pedals; vertical outer panels such as doors, fenders and backdoors; horizontal outer panels such as bonnets and roofs; and engine room members such as air intakes, front-end modules and fan shrouds.

### EXAMPLES

Hereinbelow, the present invention will be described in further detail based on Examples. However, it should be construed that the scope of the present invention is not limited to such Examples.

First, the raw materials used in Examples and Comparative Examples are described below.

### [Glass fiber (D'1)]

The following glass roving manufactured by Central Glass Co., Ltd. was used.
- ERS1150-820; fiber diameter = 16 µm, basis weight = 1150 g/1000 m

### [Propylene polymers (A1) and (B1)]

Two types of propylene homopolymers (h-PP (1) and h-PP (2)) from Prime Polymer Co., Ltd. having the following properties were used.
- "h-PP (1)": MFR = 220 g/10 min, weight average molecular weight 4.60 × 10⁴
- "h-PP (2)": MFR = 30 g/10 min, weight average molecular weight 3.00 × 10⁵
MFR: In accordance with ASTM D1238 (230°C, 2.16 kg)

### [Acid-modified polyolefin resin (C)]

Maleic anhydride-modified polypropylene (C1) was prepared by the following method.

100 Parts by mass of a polypropylene (manufactured by Prime Polymer Co., Ltd., propylene homopolymer (MFR (230°C, 2.16 kg) = 15 g/10 min)) was premixed with 1 part by mass of dialkyl peroxide (PERHEXA (registered trademark) 25B manufactured by NOF CORPORATION) and 3 parts by mass of powdered maleic anhydride (CRYSTAL MAN (registered trademark) manufactured by NOF CORPORATION). The mixture was fed to a 30 mmφ twin-screw extruder temperature-controlled at 190°C, and was melt-kneaded at 200 rpm to give a strand, which was then cooled in a water tank. Maleic anhydride-modified polypropylene was thus obtained. To remove the residual maleic anhydride that was not used for the modification, the maleic anhydride-modified polypropylene was vacuum dried at 40°C for 2 hours. The maleic anhydride-modified polypropylene (m1-2) thus obtained had a maleic acid content of 2.5% by mass and MFR (230°C, 2.16 kg) of 800 g/10 min.

### [Example 1]

### [Preparation of glass fiber-reinforced MB (1)]

90 Parts by weight of h-PP (1) as the propylene polymer (B1) and 10 parts by weight of the acid-modified polyolefin resin (C) were mixed with each other uniformly beforehand, and the mixture was fed to a hopper of a single-screw extruder (screw diameter: 50 mm, L/D: 28) equipped with an impregnation die. While extruding the resin at a cylinder temperature of 180°C and a screw rotational speed of 50 rpm, glass fibers (D'1) were continuously inserted into the impregnation die. The diameter of the nozzle at the tip of the die was adjusted so that the nozzle would discharge a fiber-reinforced strand which included the glass fibers and the resin and had a glass fiber content of 50% by weight. The strand was then cooled in a cold water tank and was cut to a length of 9 mm with a pelletizer while being taken up by a draw-off machine. A masterbatch was thus obtained in which the long glass fibers were impregnated with the resin mixture (hereinafter, this masterbatch will be written as the "glass fiber-reinforced MB (1)").

### [Injection molding (fabrication of test pieces for properties evaluation) and evaluation of properties]

Injection molding was performed using an injection molding machine which had a mold clamping force of 450 ton, a screw diameter of 72 mm, and a length of 2060 mm from the center of a material charging hopper to the tip of a nozzle of an injection unit. The injection molding machine was provided with a vent port located at a center-to-center distance of 1030 mm from the hopper along the direction toward the tip of the nozzle, and was further provided with a quantitative feeder installed so that a resin material would be quantitatively fed through the vent port, and a piston-type shutter for preventing the backflow of the molten resin during injection.

The temperature from the material charging hopper to the vent port of the injection unit was set at 190°C, and the temperature from the vent port to the tip of the cylinder was set at 240°C. Further, a center gate mold having a 200 mm square plate shape with a thickness of 2.5 mm was used, and the mold temperature was set at 60°C.

In the injection molding machine, the material charging hopper was installed above a first inlet port through a mass-metering feedstock supply device therebetween. As a first feedstock resin, h-PP (2) that was the propylene polymer (A1) was charged into the material charging hopper. The glass fiber-reinforced MB (1) as a second feedstock resin was charged through the vent port (a second inlet port). Injection molding was performed under conditions where the plasticizing back pressure was 2.5 MPa, the injection time was 1 second, the pressure holding time was 3 seconds, the pressure was 20 MPa and the cooling time was 60 seconds. The proportions (the charging ratios) of the first feedstock resin and the second feedstock resin were set to 40% by weight and 60% by weight, respectively, relative to the total amount of the feedstocks so that the proportion of the glass fibers to the total amount of the feedstocks would be 30% by weight.

During the charging of the feedstocks, the rate of charging of the first resin feedstock at the first inlet port, and the rate of charging of the second resin feedstock at the second inlet port were monitored. At the same time, based on the rates of charging, a feedstock shutter disposed at a lower portion of the material charging hopper was opened and closed repeatedly, and further the mass-metering feedstock supply device was operated to control the amount of the first resin feedstock charged through the first inlet port so that the charging of the first resin feedstock would last to the end of the charging of the second resin feedstock.

Test pieces were prepared by cutting the same positions of the molded articles obtained (the molded articles obtained were cut at the same position), and were subjected to a tensile test in accordance with IS0527-1, a bending test in accordance with ISO178, and an Izod impact test (notched, 23°C) in accordance with ISO180. The results obtained were tensile strength: 71.0 MPa, tensile elastic modulus: 3.5 GPa, flexural strength: 114.7 MPa, flexural modulus: 4.7 GPa, and Izod impact strength: 18.1 kJ/m².

### [Injection molding (fabrication of test piece for appearance evaluation) and evaluation of appearance]

A test piece for appearance evaluation was molded in the same manner as the fabrication of the test pieces for properties test evaluation, except that the mold was replaced by a center gate mold which had a 200 mm square plate shape with a thickness of 1.5 mm and had a pattern of grids engraved at pitches of 30 mm, and that the mold temperature was set at 200°C.

The molded article obtained was placed on a light box, and the appearance was observed in a 100 mm × 100 mm field of view while applying light through the bottom. Specifically, unspread fibers were visually counted and photographed.

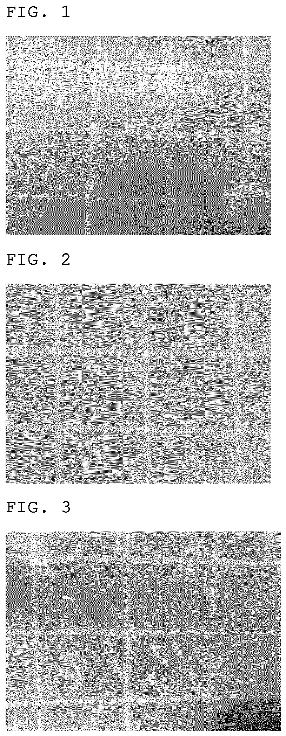

There were no unspread glass fibers, and the appearance was satisfactory. The evaluation results are described in Table 1 and Fig. 1.

### [Example 2]

Injection molding was performed, and the properties and appearance were measured and evaluated in the same manner as in Example 1, except that the proportions (the charging ratios) of the first feedstock resin and the second feedstock resin were changed to 20% by weight and 80% by weight, respectively, relative to the total amount of the feedstocks so that the proportion of the glass fibers to the total amount of the feedstocks would be 40% by weight. The results are described in Table 1.

### [Comparative Example 1]

Injection molding was performed, and the properties and appearance were measured and evaluated in the same manner as in Example 1, except that the second feedstock resin was fed together with the first feedstock resin into the material charging hopper disposed above the first inlet port of the injection molding machine, and that the amount of charging of the first feedstock resin was not controlled. The results are described in Table 1. Further, a photograph of the molded article obtained is shown in Fig. 2.

### [Comparative Example 2]

Injection molding was performed, and the properties and appearance were measured and evaluated in the same manner as in Example 2, except that the second feedstock resin was fed together with the first feedstock resin into the material charging hopper disposed above the first inlet port of the injection molding machine, and that the amount of charging of the first feedstock resin was not controlled. The results are described in Table 1.

### [Comparative Example 3]

Injection molding was performed, and the properties and appearance were measured and evaluated in the same manner as in Example 1, except that chopped glass fibers (glass fibers (D'1) cut to a length of 9 mm) were used in place of the glass fiber-reinforced MB (1) and were fed together with the first feedstock into the material charging hopper disposed above the first inlet port of the injection molding machine, and that the amount of the fibers was controlled so that the proportion of the glass fibers to the total amount of the feedstocks would be 30% by weight.

A photograph of the molded article obtained is shown in Fig. 3. There were many unspread and poorly dispersed glass fibers.

### [Comparative Example 4]

Injection molding was performed, and the properties and appearance were measured and evaluated in the same manner as in Comparative Example 3, except that the proportions of the first feedstock resin and the chopped glass fibers relative to the total amount of the feedstocks were changed so that the proportion of the glass fibers to the total amount of the feedstocks would be 40% by weight. The results are described in Table 1. Similarly to Comparative Example 3, the appearance was unsatisfactory.

### [Comparative Example 5]

Injection molding was performed, and the properties and appearance were measured and evaluated in the same manner as in Comparative Example 3, except that the chopped glass fibers were charged through the vent port (the second inlet port). The results are described in Table 1. Similarly to Comparative Example 3, the appearance was unsatisfactory.

### [Example 3]

Injection molding was performed, and the properties and appearance were measured and evaluated in the same manner as in Example 1, except that the proportions (the charging ratios) of the first feedstock resin and the second feedstock resin relative to the total amount of the feedstocks were changed to 60% by weight and 40% by weight, respectively, so that the proportion of the glass fibers to the total amount of the feedstocks would be 20% by weight. The results are described in Table 1.

### [Table 1]

**Table 1**

| | | Ex. 1 | Comp. Ex. 1 | Comp. Ex. 3 | Comp. Ex. 5 | Ex. 2 | Comp. Ex. 2 | Comp. Ex. 4 | Ex. 3 |
|---|---|---|---|---|---|---|---|---|---|
| | Fiber content [wt%] | 30 | | | | 40 | | | 20 |
| First resin feedstock | h-PP (2) | First inlet port | First inlet port | First inlet port | First inlet port | First inlet port | First inlet port | First inlet port | First inlet port |
| Second resin feedstock | Glass fiber-reinforced MB (1) | Second inlet port | First inlet port | - | - | Second inlet port | First inlet port | - | Second inlet port |
| Other feedstocks | Chopped glass fibers | - | - | First inlet port | Second inlet port | - | - | First inlet port | - |
| Properties | Tensile strength [MPa] | 71.0 | 64.8 | 53.0 | 64.7 | 79.1 | 71.3 | 65.5 | 64.1 |
| | Tensile elastic modulus [GPa] | 3.5 | 3.6 | 3.7 | 3.6 | 4.7 | 4.1 | 4.2 | 3.2 |
| | Flexural strength [MPa] | 114.7 | 108.9 | 108.2 | 107.0 | 123.6 | 131.2 | 119.5 | 104.7 |
| | Flexural modulus [GPa] | 4.7 | 5.2 | 5.9 | 5.2 | 6.4 | 7.3 | 7.5 | 3.4 |
| | Izod impact [kJ/m²] | 18.1 | 13.4 | 10.3 | 13.8 | 21.8 | 13.2 | 11.0 | 15.8 |
| Appearance (unspread fiber count) | | Good (0) | Good (0) | Poor (> 100) | Poor (> 100) | Good (0) | Good (0) | Poor (> 100) | Good (0) |

In Examples 1, 2 and 3, the first resin feedstock and the second resin feedstock were charged through the first inlet port and the second inlet port, respectively, and the first resin feedstock was added intermittently from the start to the end of the charging of the second resin feedstock. The fiber-reinforced resin compositions produced in these Examples had a fiber content of 20 to 40%, a particularly high impact resistance (Izod impact strength), and excellent tensile strength and flexural strength. These compositions have been demonstrated to have more excellent properties with increasing fiber content.

In contrast, Comparative Examples 1 and 2 in which the first resin feedstock and the second resin feedstock were both charged through the first inlet port resulted in fiber-reinforced resin compositions which were poor in impact resistance in spite of the fiber content being 30 to 40%. A reason behind these results is probably because the length of the residual fibers in the molded articles was short.

Further, the appearance was unsatisfactory in Comparative Examples 3 to 5 in which chopped glass fibers were used in place of the glass fiber-reinforced MB (1). Comparative Example 5 in which the chopped glass fibers were supplied through the second inlet port compared favorably in properties improvements, but compared unfavorably in appearance to Comparative Example 3 in which the chopped glass fibers were charged through the first inlet port. Further, it has been shown that Example 1 was not only excellent in appearance but also attained further enhancements in properties over Comparative Example 5.

## Claims

1. A method for producing an injection molded article comprising a highly-filled fiber-reinforced resin composition, the method comprising:
a step (I) of charging a first resin feedstock into an injection molding machine through a first inlet port, the first resin feedstock comprising at least one thermoplastic polymer (A) selected from polyolefins (A1) and polyamides (A2),
a step (II) of charging a second resin feedstock into the injection molding machine through a second inlet port disposed downstream of the first inlet port, the second resin feedstock comprising a masterbatch that includes long fibers (D) impregnated with a resin mixture including at least one thermoplastic polymer (B) selected from polyolefins (B1) and polyamides (B2), and an acid-modified polyolefin (C),
a step (III) of melt-kneading the first resin feedstock and the second resin feedstock together in the injection molding machine to give a fiber-reinforced resin composition melt, and
a step (IV) of injection molding the fiber-reinforced resin composition melt in a mold,
the first resin feedstock being charged intermittently or continuously from start to end of the charging of the second resin feedstock.

2. The method according to Claim 1 for producing an injection molded article, wherein the long fibers (D) comprise at least one selected from glass fibers (D'1) and carbon fibers (D'2).

3. The method according to Claim 1 or 2 for producing an injection molded article, wherein the content of the long fibers (D) in the highly-filled fiber-reinforced resin composition is not less than 30% by weight.

4. The method according to any one of Claims 1 to 3 for producing an injection molded article, wherein the masterbatch included in the second resin feedstock is one prepared through steps comprising:
a step of impregnating a fiber (D') with a resin mixture including at least one thermoplastic polymer (B) selected from polyolefins (B1) and polyamides (B2), and an acid-modified polyolefin (C) to give a resin-impregnated fiber, and
a step of cutting the resin-impregnated fiber.

5. The method according to any one of Claims 1 to 4 for producing an injection molded article, wherein the injection molding machine comprises a system which controls charging in such a manner that the first resin feedstock is charged intermittently or continuously from the start to the end of the charging of the second resin feedstock.

6. The method according to Claim 5 for producing an injection molded article, wherein the system is a unit comprising:
a material charging hopper disposed above the first inlet port,
a device that monitors the rate of charging of the first resin feedstock at the first inlet port,
a device that monitors the rate of charging of the second resin feedstock at the second inlet port, and
a device (1) and/or a device (2),
wherein the device (1) is a device that, based on the rates of charging, opens or closes a feedstock shutter disposed at a lower portion of the material charging hopper, or controls the degree of openness of the feedstock shutter, and
the device (2) is a mass-metering feedstock supply device disposed between the first inlet port and the material charging hopper.
